# EUROPEAN PATENT APPLICATION

(11) **EP 4 435 417 A1**
(43) Date of publication of application: **25.09.2024**
(21) Application number: 24163952.5
(22) Date of filing: 15.03.2024
(51) Int. Cl.: G01N 23/04, G01N 23/18

(54) **X-RAY INSPECTION APPARATUS**

(30) Priority: 20.03.2023 JP 2023043846
(71) Applicant: Ishida Co., Ltd., Kyoto-shi Kyoto 606-8392 (JP)
(72) Inventor: TOMINAGA, Kota, Ritto-shi, Shiga, 520-3026 (JP)
(74) Representative: Global IP Europe Patentanwaltskanzlei

(57) **Abstract**

An X-ray inspection apparatus includes: a conveying unit; an irradiation unit configured to irradiate the article with an electromagnetic wave; a detection unit configured to detect the electromagnetic wave transmitted through the article; a housing configured to accommodate the detection unit; and an inspection unit configured to inspect the article. The conveying unit includes a pair of conveying units, a plate member is provided between the passing region and the detection unit, and the plate member is attached to a wall portion that is a part of the housing, and a surface of the plate member is located lower than an upper surface of the wall portion.

## Description

### TECHNICAL FIELD

The present disclosure relates to an X-ray inspection apparatus.

### BACKGROUND

Conventionally, as described in Patent Literature 1 (Japanese Unexamined Patent Publication No. 2018-155561), an X-ray inspection apparatus having a pair of conveying units arranged side by side with an X-ray passing region interposed therebetween is known. In this apparatus, an X-ray irradiation unit is provided on one (an upper one) of the pair of conveying units, and an X-ray detection unit is provided on the other (a lower one) of the pair of conveying units. An X-ray emitted from the X-ray irradiation unit passes through an article, passes through the X-ray passing region, and enters the X-ray detection unit. The X-ray is converted into light and further converted into an electric signal, and an X-ray transmission image is generated in a control unit. Also in an apparatus described in Patent Literature 2 (Japanese Unexamined Patent Publication No. 2019-007859 A), a gap is provided between an upstream conveyor and a downstream conveyor, and an X-ray source is located above the gap, and the detection unit is located below the gap.

### SLTMMARY

In the apparatus of Patent Literature 1, the conveying unit includes a conveyor or the like, and the gap is present therebelow. For example, there is the gap between a housing accommodating the X-ray detection unit and the conveyor. In order to prevent the X-ray from leaking from the gap, a shielding member or the like is provided near the X-ray passing region in the conveying unit. The apparatus of Patent Literature 2 is also provided with a plurality of shielding members.

On the other hand, a plate member may be provided between the X-ray passing region and the X-ray detection unit for the purpose of, for example, enhancing a waterproof property inside the apparatus while allowing transmission of the X-ray of the X-ray detection unit. When the X-ray is scattered on a surface of the plate member, the scattered X-ray may leak through a slight gap between the shielding member and another member.

An object of the present disclosure is to provide an X-ray inspection apparatus capable of more reliably preventing leakage of X-rays.

(1) An X-ray inspection apparatus according to one aspect of the present disclosure includes: a conveying unit configured to convey an article; an irradiation unit configured to irradiate the article conveyed by the conveying unit with an electromagnetic wave; a detection unit configured to detect the electromagnetic wave emitted from the irradiation unit and transmitted through the article; a housing configured to accommodate the detection unit; and an inspection unit configured to inspect the article based on a detection result of the detection unit. The conveying unit includes a pair of conveying units arranged side by side with a passing region through which the electromagnetic wave from the irradiation unit to the detection unit passes therebetween, a plate member is provided between the passing region and the detection unit, and the plate member is attached to a wall portion that is a part of the housing, and a surface of the plate member is located lower than an upper surface of the wall portion.

According to the X-ray inspection apparatus, the plate member is provided between the passing region between the pair of conveying units and the detection unit. Since the surface of the plate member is located lower than the upper surface of the wall portion of the housing, the X-ray scattered on the surface is blocked by a portion (step portion) where the thickness of the wall portion is exposed, and further leakage to the outside is reduced. Therefore, the leakage of the X-ray can be more reliably prevented.

(2) In the X-ray inspection apparatus according to (1), the wall portion of the housing may have an opening located between the passing region and the detection unit, the plate member may include: a protruding plate portion fitted into the opening and including the surface; and a base plate portion protruding from the protruding plate portion and facing a back surface of the wall portion, and a height at which the protruding plate portion protrudes from the base plate portion may be smaller than a thickness of the wall portion around the opening. In this case, even if the base plate portion comes into contact with the back surface of the wall portion (or even if the base plate portion comes close enough to come into contact with the back surface), the surface of the protruding plate portion is reliably located lower than the upper surface of the wall portion.

(3) In the X-ray inspection apparatus according to (2), an elastic member may be interposed between the base plate portion and the back surface of the wall portion. The elastic member plays a role of, for example, enhancing sealing between the plate member and the wall portion. Since the elastic member is interposed therebetween, the surface of the protruding plate portion is located further lower than the upper surface of the wall portion.

(4) In the X-ray inspection apparatus according to any one of (1) to (3), a shielding block may be provided between the passing region and the plate member and on a side of the passing region. In this case, in addition to the step portion, the shielding block shields the X-ray. Therefore, countermeasures against the leakage of the X-ray are more complete.

According to the present disclosure, the leakage of the X-ray can be more reliably prevented.

### BRIEF DESCRIPTION OF THE DRAWINGS

FIG. 1 is a front view of an X-ray inspection apparatus according to an embodiment of the present disclosure;
FIG. 2 is a perspective view of the X-ray inspection apparatus in FIG. 1;
FIG. 3 is a plan view of a conveying unit in FIG. 1;
FIG. 4 is a cross-sectional view of the X-ray inspection apparatus taken along a vertical plane passing through a passing region;
FIG. 5 is a cross-sectional view illustrating a wall portion, a shielding block, and a plate member provided below the conveying unit; and
FIG. 6 is an exploded cross-sectional view of FIG. 5.

### DETAILED DESCRIPTION

Hereinafter, an embodiment of the present invention will be described with reference to the drawings. Note that in the description of the drawings, the same elements are denoted by the same reference numerals, and redundant description is omitted.

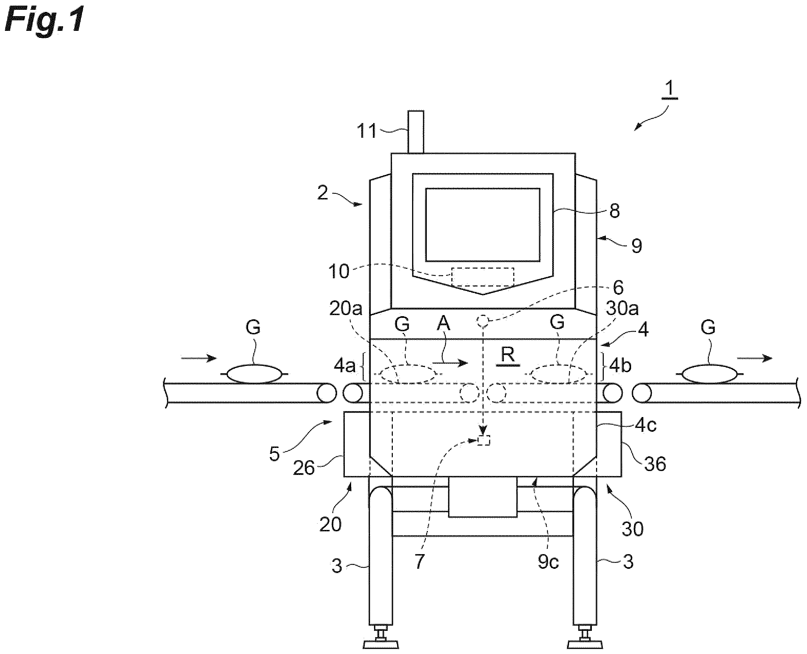

As illustrated in FIG. 1, an X-ray inspection apparatus 1 includes an apparatus body 2, support legs 3, a shield box (housing) 4, a conveying unit 5, an X-ray irradiation unit 6, an X-ray detection unit 7, a display operation unit (a notification unit) 8, and a control unit 10. The X-ray inspection apparatus 1 generates an X-ray transmission image of an article G while conveying the article G, and inspects the article G based on the X-ray transmission image (for example, storage number inspection, foreign matter mixing inspection, missing inspection, crack and chip inspection, and the like). The article G before the inspection is carried into the X-ray inspection apparatus 1 by a carry-in conveyor 20a. The article G after the inspection is carried out from the X-ray inspection apparatus 1 by a carry-out conveyor 30a. The article G determined as a defective product by the X-ray inspection apparatus 1 is distributed to an outside of a production line by a distribution device (not illustrated) disposed downstream of the carry-out conveyor 30a. The article G determined as a non-defective product by the X-ray inspection apparatus 1 passes through the distribution device as it is.

The apparatus body 2 houses the control unit 10 and the like. The support legs 3 support the apparatus body 2. The shield box 4 is provided in the apparatus body 2. The shield box 4 prevents leakage of X-rays to the outside. An inspection region R in which the article G is inspected by the X-ray is provided inside the shield box 4. A carry-in port 4a and a carry-out port 4b are formed in the shield box 4. The article G before inspection is carried into the inspection region R from the carry-in conveyor 20a through the carry-in port 4a. The article G after inspection is carried out from the inspection region R to the carry-out conveyor 30a via the carry-out port 4b. Each of the carry-in port 4a and the carry-out port 4b is provided with an X-ray shielding curtain (not illustrated) that prevents leakage of X-rays.

The conveying unit 5 is disposed in the shield box 4. The conveying unit 5 conveys the article G from the carry-in port 4a to the carry-out port 4b via the inspection region R in a conveying direction A. The conveying unit 5 is, for example, a belt conveyor stretched between the carry-in port 4a and the carry-out port 4b.

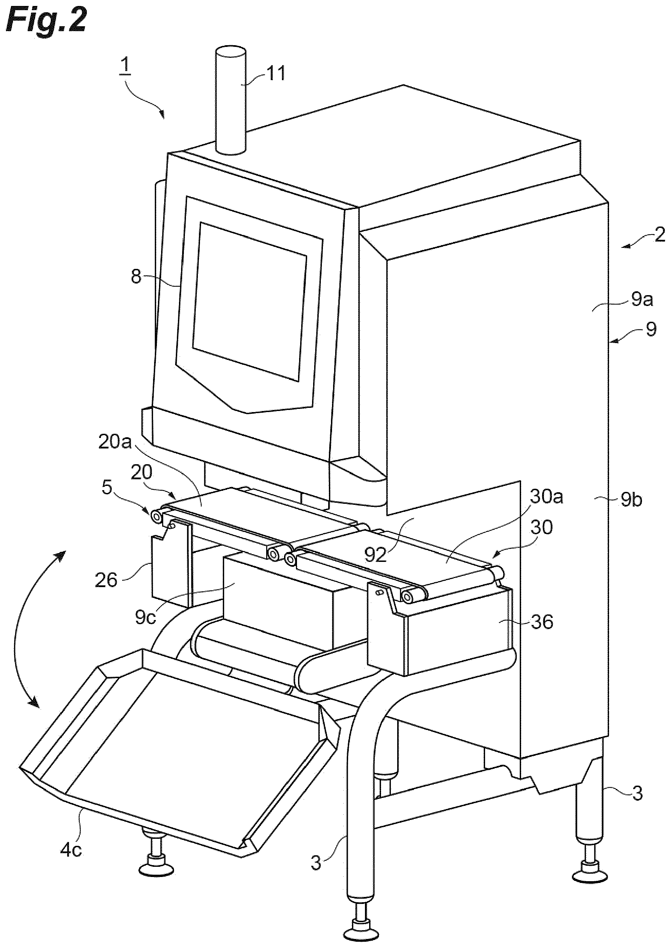

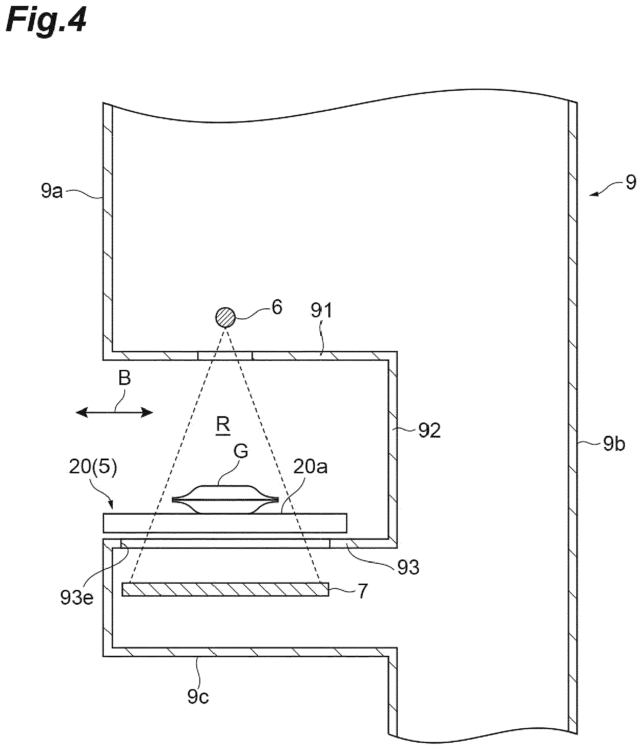

The apparatus body 2 has, for example, a housing 9 made of a material capable of shielding electromagnetic waves such as X-rays. As illustrated in FIG. 2, the housing 9 includes an upper portion 9a provided with the display operation unit 8 on a front surface thereof, a back portion 9b extending in a vertical direction, and a lower portion 9c protruding forward from the back portion 9b. When viewed from the downstream side in the conveying direction A, a first wall portion 91 of the upper portion 9a, a second wall portion 92 of the back portion 9b, and a third wall portion 93 of the lower portion 9c form a U-shape opened forward (see FIG. 4), and portions of the carry-in conveyor 20a and the carry-out conveyor 30a near a passing region X (described later) are arranged in a space surrounded by these wall portions. A front surface of the shield box 4 is covered with a shielding cover 4c that is opened and closed at the time of maintenance or the like.

As illustrated in FIGS. 1 and 4, the X-ray irradiation unit 6 is disposed, for example, in the upper portion 9a of the housing 9. The X-ray irradiation unit 6 irradiates the article G conveyed by the conveying unit 5 with the X-ray (electromagnetic wave). The X-ray irradiation unit 6 includes, for example, an X-ray tube that emits the X-ray, and a collimator that spreads the X-ray emitted from the X-ray tube in a fan shape in a plane perpendicular to the conveying direction A.

The X-ray detection unit 7 is disposed in the lower portion 9c of the housing 9. The X-ray detection unit 7 detects the X-ray emitted by the X-ray irradiation unit 6 and transmitted through the article G. The X-ray detection unit 7 is configured as, for example, a line sensor. Specifically, the X-ray detection unit 7 includes a plurality of photodiodes arranged one-dimensionally in a horizontal direction perpendicular to the conveying direction A, and a scintillator disposed on the X-ray incident side with respect to each photodiode. In this case, in the X-ray detection unit 7, the X-ray incident on the scintillator is converted into light, and the light incident on each photodiode is converted into an electric signal.

As illustrated in FIGS. 1 and 2, the display operation unit 8 is provided in the upper portion 9a of the housing 9 and faces forward. The display operation unit 8 displays various types of information (that is, notifies an operator of an operation state) and receives inputs of various conditions. The display operation unit 8 is, for example, a liquid crystal display, and displays an operation screen as a touch panel. In this case, the operator can input various conditions via the display operation unit 8. The display operation unit 8 provides notification of various abnormalities in the X-ray inspection apparatus 1. A notification lamp 11 also functioning as the notification unit is erected on the upper portion 9a of the housing 9.

The control unit 10 is disposed in the apparatus body 2. The control unit 10 controls an operation of each unit of the X-ray inspection apparatus 1. The control unit 10 includes a central processing unit (CPU), a read only memory (ROM), a random access memory (RAM), and the like. The control unit 10 receives an A/D converted signal output from the X-ray detection unit 7. The control unit 10 functions as an inspection unit that generates the X-ray transmission image of the article G based on the signal output from the X-ray detection unit 7 and inspects the article G based on the X-ray transmission image.

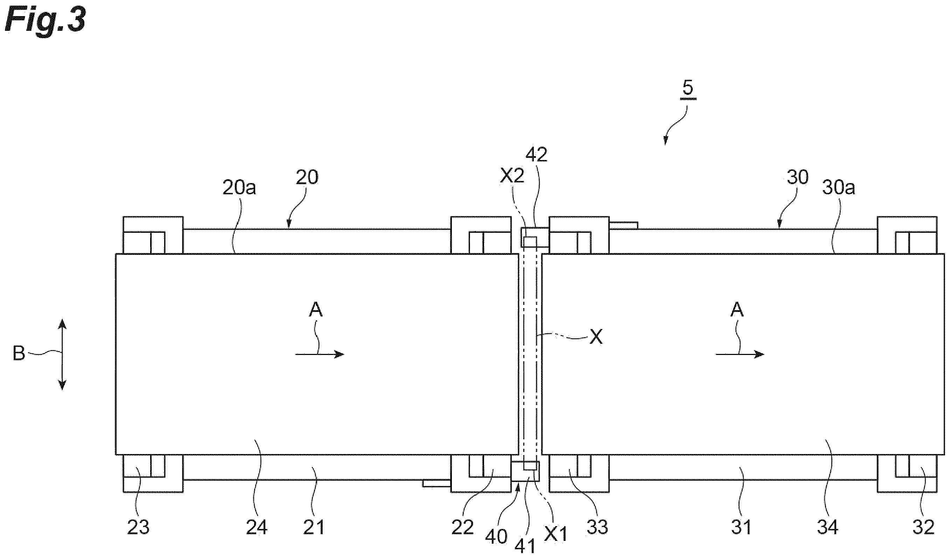

As illustrated in FIG. 3, the conveying unit 5 includes a pair of conveying units 20 and 30 and an X-ray shielding unit 40. The pair of conveying units 20 and 30 are arranged side by side with the passing region X of the X-ray (see FIG. 1) from the X-ray irradiation unit 6 to the X-ray detection unit 7 interposed therebetween. Thus, detection sensitivity of the X-ray is improved, and maintainability of the conveying unit 5 is improved. Note that the passing region X extends in a direction B. The direction B is a third direction intersecting both a first direction (that is, the conveying direction A) in which the conveying unit 5 conveys the article and a second direction (see FIG. 1) in which the X-ray irradiation unit 6 and the X-ray detection unit 7 face each other.

The conveying unit 20 disposed upstream in the conveying direction A includes a frame 21, a plurality of conveying rollers 22 and 23, and a conveying belt 24. The frame 21 is attached to the apparatus body 2 (shield box 4) via a motor box 26. The conveying rollers 22 and 23 are rotatably supported by the frame 21. As an example, the conveying roller 23 disposed upstream in the conveying direction A is a driving roller, and the conveying roller 22 disposed downstream in the conveying direction A is a driven roller. The conveying belt 24 is an endless belt, and is stretched between the conveying rollers 22 and 23.

The conveying unit 30 disposed downstream in the conveying direction A includes a frame 31, a plurality of conveying rollers 32 and 33, and a conveying belt 34. The frame 31 is attached to the apparatus body 2 (shield box 4) via a motor box 36. The conveying rollers 32 and 33 are rotatably supported by the frame 31. As an example, the conveying roller 32 disposed downstream in the conveying direction A is a driving roller, and the conveying roller 33 disposed upstream in the conveying direction A is a driven roller. The conveying belt 34 is an endless belt, and is stretched between the conveying rollers 32 and 33.

The X-ray shielding unit 40 includes a first X-ray shielding member 41 and a second X-ray shielding member 42. Each of the first X-ray shielding member 41 and the second X-ray shielding member 42 is made of a plate material made of metal. The first X-ray shielding member 41 is attached to the frame 21 of the conveying unit 20. The first X-ray shielding member 41 shields the X-ray at one end portion X1 of the passing region X in the direction B. The second X-ray shielding member 42 is attached to the frame 31 of the conveying unit 30. The second X-ray shielding member 42 shields the X-ray at the other end portion X2 of the passing region X in the direction B.

The control unit 10 controls the X-ray irradiation unit 6 to emit the X-ray, for example, at the time of starting the X-ray inspection apparatus 1, and generates the X-ray transmission image based on the signal output from the X-ray detection unit 7. Then, the control unit 10 determines whether each of the pair of conveying units 20 and 30 is attached based on the generated X-ray transmission image.

For example, when the conveying unit 20 is attached and the conveying unit 30 is not attached, the X-ray is shielded by the first X-ray shielding member 41 at the end portion X1 of the passing region X, and the X-ray is not shielded at the end portion X2 of the passing region X, and thus the control unit 10 can determine that the conveying unit 20 is attached and the conveying unit 30 is not attached based on the generated X-ray transmission image. Further, when the conveying unit 30 is attached and the conveying unit 20 is not attached, the X-ray is shielded by the second X-ray shielding member 42 at the end portion X2 of the passing region X, and the X-ray is not shielded at the end portion X1 of the passing region X, and thus the control unit 10 can determine that the conveying unit 30 is attached and the conveying unit 20 is not attached based on the generated X-ray transmission image.

Furthermore, when both of the pair of conveying units 20 and 30 are attached, the X-ray is shielded by the first X-ray shielding member 41 at the end portion X1 of the passing region X, and the X-ray is shielded by the second X-ray shielding member 42 at the end portion X2 of the passing region X, and thus the control unit 10 can determine that both of the pair of conveying units 20 and 30 are attached based on the generated X-ray transmission image. Further, when both of the pair of conveying units 20 and 30 are not attached, since the X-ray is not shielded at both end portions X1 and X2 of the passing region X, the control unit 10 can determine that both of the pair of conveying units 20 and 30 are not attached based on the generated X-ray transmission image.

When determining that at least one of the pair of conveying units 20 and 30 is not attached, the control unit 10 controls the X-ray irradiation unit 6 to stop X-ray irradiation. Further, the control unit 10 controls the display operation unit 8 to display a result of determination described above. In particular, when determining that at least one of the pair of conveying units 20 and 30 is not attached, the control unit 10 controls the display operation unit 8 to specify and display the conveying unit (only the conveying unit 20, only the conveying unit 30, or both of the conveying units 20 and 30) that is not attached. Note that in the present specification, "at least one of the pair of conveying units 20 and 30" may be paraphrased as "the conveying unit 20 or the conveying unit 30". The phrase of "the conveying unit 20 or the conveying unit 30" only needs to include either the conveying unit 20 or the conveying unit 30, and may include both.

Subsequently, a configuration relating to shielding of the X-ray (electromagnetic wave), the configuration being provided below the passing region X formed between the pair of conveying units 20 and 30, that is, between the passing region X and the X-ray detection unit 7 will be described with reference to FIGS. 4, 5, and 6. As illustrated in FIG. 4, the lower portion 9c of the housing 9 accommodates the X-ray detection unit 7. An opening 93e extending in the direction B to transmit the X-ray is formed in the third wall portion 93 which is a wall portion facing the conveying unit 5 in the lower portion 9c. Note that in FIG. 4, in order to easily understand a positional relationship among the X-ray irradiation unit 6, the conveying unit 20 (conveying unit 5), the opening 93e of the third wall portion 93, and the X-ray detection unit 7, illustration of a closing structure of the opening 93e including a plate member 54 and the like to be described later is omitted.

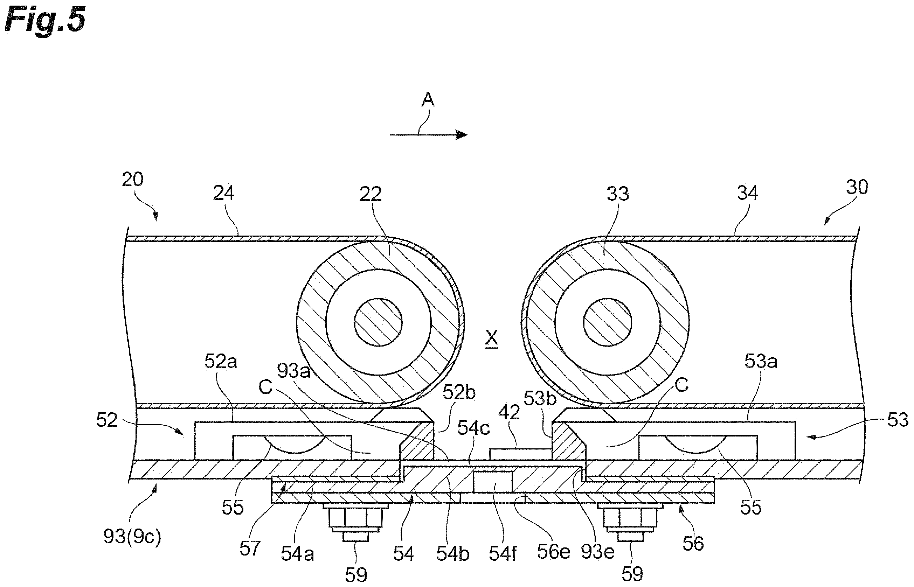

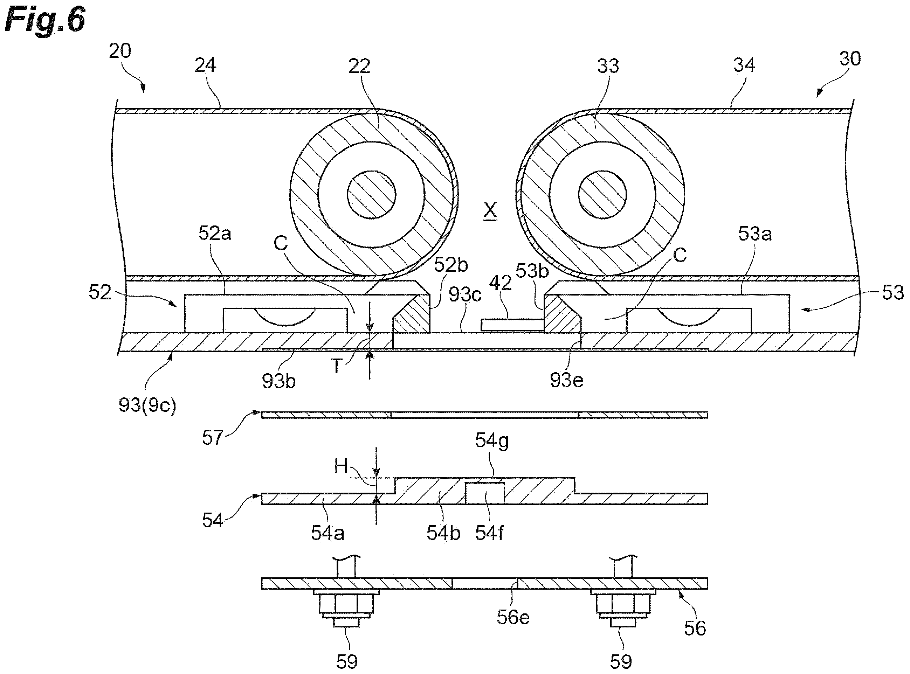

As illustrated in FIGS. 5 and 6, the plate member 54 is provided between the passing region X and X-ray detection unit 7 (disposed below the passing region X in the lower portion 9c). The plate member 54 is made of a material capable of transmitting the electromagnetic wave such as the X-ray. The plate member 54 is, for example, a carbon plate. Note that the plate member 54 may be, for example, made of resin. The opening 93e is located between the passing region X and the X-ray detection unit 7. The plate member 54 includes a rectangular flat plate-shaped base plate portion 54a larger than the opening 93e, and a rectangular protruding plate portion 54b protruding from the base plate portion 54a and fitted into the opening 93e. The plate member 54 allows transmission of the X-ray and prevents washing water or the like from entering the lower portion 9c, for example, during maintenance. The protruding plate portion 54b has a rectangular shape slightly smaller than the opening 93e in plan view. The base plate portion 54a of the plate member 54 faces a back surface 93b of the third wall portion 93, and for example, a gasket (an elastic member) 57 is interposed between the base plate portion 54a and the back surface 93b of the third wall portion 93. The gasket 57 enhances waterproofness and dustproofness (in the lower portion 9c) by the plate member 54.

The plate member 54 and the gasket 57 are fixed to the third wall portion 93 by a rectangular plate-shaped pressing member 56 and a plurality of fastening members 59 arranged below the plate member 54 and the gasket 57. The gasket 57 is compressed in the thickness direction by a fastening force of the fastening member 59. In an X-ray irradiation region including a plane connecting the passing region X and the X-ray detection unit 7, an opening is provided in these members, or thickness of the members is thinned. A counterbore portion 54f extending in the direction B is formed on a back surface of a central portion of the plate member 54, and a thin portion 54g remains on an upper surface of the plate member 54. Further, an opening 56e extending in the direction B is formed in a central portion of the pressing member 56.

Furthermore, a pair of shielding blocks 52 and 53 are provided between the passing region X and the plate member 54 and on both sides of the passing region X (both left and right sides illustrated in FIG. 5). The shielding block 52 and the shielding block 53 respectively extend in the direction B between the conveying roller 22 and the third wall portion 93 and between the conveying roller 33 and the third wall portion 93. The shielding blocks 52 and 53 are fixed to the conveying units 20 and 30 by attaching screws 55 at positions on both end portions in the direction B. The shielding blocks 52 and 53 include end blocks 52a and 53a provided at both end portions in the direction B and shielding walls 52b and 53b extending along a pair of edge portions (edge portions extending in the direction B) intersecting the conveying direction A of the opening 93e. These shield a space between the passing region X and the opening 93e (between the plate member 54 and the plate member 54) as much as possible in a gap C formed between the conveying units 20 and 30 and the third wall portion 93.

As illustrated in FIG. 5, the plate member 54 is attached to the third wall portion 93 which is a part of the housing 9. Here, as illustrated in FIG. 6, a height H at which the protruding plate portion 54b protrudes from the base plate portion 54a is smaller than a thickness T of the third wall portion 93 around the opening 93e. A surface 54c of the protruding plate portion 54b is located lower than an upper surface 93a of the third wall portion 93. That is, the surface 54c of the protruding plate portion 54b is lowered (retracted) from the upper surface 93a of the third wall portion 93, and a part of the thickness of the third wall portion 93 as a peripheral surface of the opening 93e is exposed.

According to the X-ray inspection apparatus 1 of the present embodiment, the plate member 54 is provided between the passing region X between the pair of conveying units 20 and 30 and the X-ray detection unit 7. Since the surface 54c of the plate member 54 is located lower than the upper surface 93a of the third wall portion 93, the X-ray scattered on the surface 54c is blocked by a portion (step portion) where the thickness of the third wall portion 93 is exposed, and further leakage to the outside is reduced. Therefore, the leakage of the X-ray can be more reliably prevented. In particular, the X-ray is likely to be scattered on a surface of the carbon plate, and there is a possibility that the scattered X-ray leaks toward the gap C (for example, through the gap between the shielding blocks 52 and 53 and the third wall portion 93), however, due to the above operation and effect, the leakage of the X-ray to the outside is reduced.

The height H at which the protruding plate portion 54b protrudes from the base plate portion 54a is smaller than the thickness T of the third wall portion 93 around the opening 93e. Thus, even when the base plate portion 54a approaches the back surface 93b of the third wall portion 93 as close as possible, the surface 54c of the protruding plate portion 54b is reliably located lower than the upper surface 93a of the third wall portion 93.

The gasket 57 plays a role of, for example, enhancing sealing between the plate member 54 and the third wall portion 93. Since the gasket 57 is interposed therebetween, the surface 54c of the protruding plate portion 54b is located further lower than the upper surface 93a of the third wall portion 93. That is, an exposed area of the step portion (a part of the thickness of the third wall portion 93) increases.

Further, in addition to the step portion, the shielding blocks 52 and 53 shield the X-ray. Therefore, countermeasures against the leakage of the X-ray are more complete.

Although the embodiment of the present disclosure has been described above, the present invention is not limited to the above embodiment. For example, an elastic member (intervening member) such as the gasket 57 may be omitted. The plate member 54 may have a shape different from the above. The counterbore portion 54f may not be formed. The plate member may have, for example, a single block shape fitted into the opening 93e. The plate member may have, for example, a single flat plate shape facing the back surface 93b of the third wall portion 93.

The electromagnetic wave irradiated by the irradiation unit and detected by the detection unit is not limited to the X-ray.

At least a part of the embodiment described above may be arbitrarily combined.

## Claims

1. An X-ray inspection apparatus comprising:
a conveying unit configured to convey an article;
an irradiation unit configured to irradiate the article conveyed by the conveying unit with an electromagnetic wave;
a detection unit configured to detect the electromagnetic wave emitted from the irradiation unit and transmitted through the article;
a housing configured to accommodate the detection unit; and
an inspection unit configured to inspect the article based on a detection result of the detection unit, wherein
the conveying unit includes a pair of conveying units arranged side by side with a passing region through which the electromagnetic wave from the irradiation unit to the detection unit passes therebetween,
a plate member is provided between the passing region and the detection unit, and
the plate member is attached to a wall portion that is a part of the housing, and a surface of the plate member is located lower than an upper surface of the wall portion.

2. The X-ray inspection apparatus according to claim 1, wherein
the wall portion of the housing has an opening located between the passing region and the detection unit,
the plate member includes: a protruding plate portion fitted into the opening and including the surface; and a base plate portion protruding from the protruding plate portion and facing a back surface of the wall portion, and
a height at which the protruding plate portion protrudes from the base plate portion is smaller than a thickness of the wall portion around the opening.

3. The X-ray inspection apparatus according to claim 2, wherein an elastic member is interposed between the base plate portion and the back surface of the wall portion.

4. The X-ray inspection apparatus according to any one of claims 1 to 3, wherein a shielding block is provided between the passing region and the plate member and on a side of the passing region.
